Europäisches Patentamt

European Patent Office

Office européen des brevets

(19)

(11) **EP 1 571 762 A1**

(12) **EUROPEAN PATENT APPLICATION**
published in accordance with Art. 158(3) EPC

(43) Date of publication:
**07.09.2005 Bulletin 2005/36**

(51) Int Cl.⁷: **H04B 7/26**, H04L 1/00,
H04L 27/00, H04L 27/34,
H04L 27/18

(21) Application number: **03775881.0**

(22) Date of filing: **26.11.2003**

(86) International application number:
**PCT/JP2003/015058**

(87) International publication number:
**WO 2004/049599 (10.06.2004 Gazette 2004/24)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **28.11.2002 JP 2002346270**

(71) Applicant: **MATSUSHITA ELECTRIC INDUSTRIAL
CO., LTD.
Osaka 571-8501 (JP)**

(72) Inventors:
• **ARIMA, Takenobu**
**Yokohama-shi, Kanagawa 236-0042 (JP)**
• **IOCHI, Hitoshi**
**Yokohama-shi, Kanagawa 235-0023 (JP)**

(74) Representative: **Grünecker, Kinkeldey,
Stockmair & Schwanhäusser Anwaltssozietät
Maximilianstrasse 58
80538 München (DE)**

(54) **BASE STATION DEVICE AND ADAPTIVE MODULATION METHOD**

(57) A UE/queue selected by a scheduler is input to an offset table (111) and a corresponding offset value is output to a CQI conversion section (112). Using this offset value, the CQI conversion section (112) converts a CQI output from a demodulation/decoding section and outputs the converted CQI to an adaptive modulation parameter determination section (113). Based on the converted CQI, the adaptive modulation parameter determination section (113) determines and outputs adaptive modulation parameters with reference to an adaptive modulation parameter table (114). Then, a transmission packet is adaptively modulated using these adaptive modulation parameters. This makes it possible to realize fast data transmission while satisfying QoS of the transmission packet.

106 ADAPTIVE MODULATION CONTROL SECTION

FIG.3

**Description**

Technical Field

The present invention relates to a base station apparatus that performs adaptive modulation in a communication system such as HSDPA (High Speed Downlink Packet Access) and an adaptive modulation method used in this apparatus.

Background Art

As a faster IMT-2000 packet transmission system, a scheme called "HSDPA (High Speed Downlink Packet Access) " intended to enhance a downlink peak transmission rate, decrease transmission delay and improve throughput is under study. As a technology for constructing the HSDPA, the 3GPP (3rd Generation Partnership Project) TR25.848 "Physical layer aspects of UTRA High Speed Downlink Packet Access" discloses a transmission scheme called "AMC (Adaptive Modulation and Coding).

This AMC technology is a technology for changing adaptive modulation parameters such as modulation multivalue number, error correcting coding rate, etc., adaptively and at high speed according to a variation in channel quality. The AMC technology increases the transmission rate using a greater modulation multivalue number and coding rate as the channel quality improves. More specifically, a mobile station measures a propagation path environment on a downlink at all times and notifies a base station of an adaptive modulation request CQI (Channel Quality Indicator) based on this measuring result. This CQI value corresponds to a set of adaptive modulation parameters. The base station determines a mobile station to which transmission data should be sent and optimal adaptive modulation parameters based on this CQI and sends transmission data.

Modulationmultivaluenumber (for example, switched between QPSK (Quaternary Phase Shift Keying) and 16QAM (Quadrature Amplitude Modulation), coding rate (for example, turbo-coded at R=1/3 and changed by puncturing or repetition), etc., are under study as parameters (adaptive modulation parameters) to be changed by adaptive modulation. On the other hand, CIR (Carrier to Interference Ratio), SIR (Signal to Interference Ratio), transmit power of dedicated channel (e.g., DPCH (Dedicated Physical Channel)), etc., are used as channel quality information.

For example, an example of application of the AMC technology in determining adaptive modulation parameters is a scheme for changing an MCS (Modulation and Coding Scheme; modulation multivalue number and coding rate) based on a CIR or transmit power of a dedicated channel reported to a base station from a mobile station.

However, there are problems as shown below in determining such adaptive modulation parameters. That is, even if adaptive modulation parameters are determined based on instantaneous information, reliability of information decreases due to influences of a delay until a packet is actually assigned, movement of a mobile station or measuring errors of channel quality at a mobile station or base station, etc. For example, when the moving speed of a mobile station is low, a variation in a propagation environment is not so large, but when the moving speed is high, the variation in the propagation environment increases and reliability of information decreases. As a result, it is not possible to optimize assignment of adaptive modulation parameters, which may have a great influence on the throughput of a communication system.

As a method for solving this problem, a conventional base station apparatus detects a relative moving speed of the party on the other end of communication and corrects a conversion scheme determined based on the channel quality information using this detected relative moving speed of the party on the other end of communication (e.g., see TECHNICAL REPORT OF IEICE SST2001-77, RCS2001-260 (2002-03)).

However, even if adaptive modulation is performed considering the relative moving speed of the party on the other end of communication as shown above, the conventional apparatus determines adaptive modulation parameters based on the propagation path environment in a single uniformway regardless of the type of transmission data and does not always correct the adaptive modulation parameters even for data with high QoS (Qualityof Service), for example, data with a strong real-time characteristic and data of great importance and is insufficient from the standpoint of satisfying QoS of received data on the receiving side. Here, QoS refers to an error rate requested from a higher layer, allowable delay time, transmission rate, variations, packet discarding rate, etc.

Disclosure of Invention

It is an object of the present invention to enable high-speed data transmission while satisfying QoS of a transmission packet.

This object is attained, when determining adaptive modulation parameters of a transmission packet, by a base station apparatus and adaptive modulation method that makes a conversion so as to set an offset according to QoS of the packet for a CQI used and determines adaptive modulation parameters based on this converted CQI.

According to the conventional adaptive modulation method, when determining adaptive modulation parameters, a CQI (Channel Quality Indicator) corresponding to a reception CIR is notified from a mobile station and a base station determines adaptive modulation parameters whose error resistance to the transmission packet is considered neither excessive nor deficient but necessary and sufficient. Therefore, in an ideal state, sending a packet with these adaptive modulation parameters must cause almost no reception error at a mobile station. The adaptive modulation parameters refer to modulation scheme, coding rate, number of codes, TB size, etc.

However, reception errors may actually occur at the mobile station for the aforementioned reason that the propagation path environment deteriorates, etc. To prevent this, it is possible to take into account a predetermined offset when selecting adaptive modulation parameters and select safer adaptive modulation parameters for all packets in a single uniform way. However, in such a case, though a probability of packet retransmission due to reception errors decreases, there is a possibility that the transmission efficiency of the overall communication system may deteriorate.

Therefore, noting the QoS that indicates the quality, contents and degree of importance of a transmission packet, the present inventor has come up with the present invention by discovering that when determining adaptive modulation parameters, it is possible to maintain or improve the transmission efficiency in the communication system as a whole by setting a predetermined offset according to the QoS.

Brief Description of Drawings

FIG.1 is a block diagram showing the configuration of a base station apparatus according to Embodiment 1;
FIG.2 illustrates a concept of the data structure of a memory according to Embodiment 1;
FIG.3 is a block diagram showing the internal configuration of an adaptive modulation control section according to Embodiment 1;
FIG.4 illustrates the data configuration of an offset table according to Embodiment 1;
FIG.5 illustrates the data configuration of an adaptive modulation parameter table according to Embodiment 1;
FIG.6 is a flow chart showing steps of adaptive modulation processing according to Embodiment 1;
FIG.7 is a block diagram showing the configuration of a base station apparatus according to Embodiment 2;
FIG.8 is a block diagram showing the internal configuration of an adaptive modulation control section according to Embodiment 2;
FIG.9 is a block diagram showing the configuration of a base station apparatus according to Embodiment 3;
FIG.10 is a block diagram showing the internal configuration of an adaptive modulation control section according to Embodiment 3;
FIG. 11 is a block diagram showing an example of the configuration of an adaptive modulation control section according to Embodiment 4; and
FIG. 12 is a block diagram showing the configuration of a base station apparatus according to Embodiment 5.

Best Mode for Carrying out the Invention

With reference now to the attached drawings, embodiments of the present invention will be explained in detail below.

(Embodiment 1)

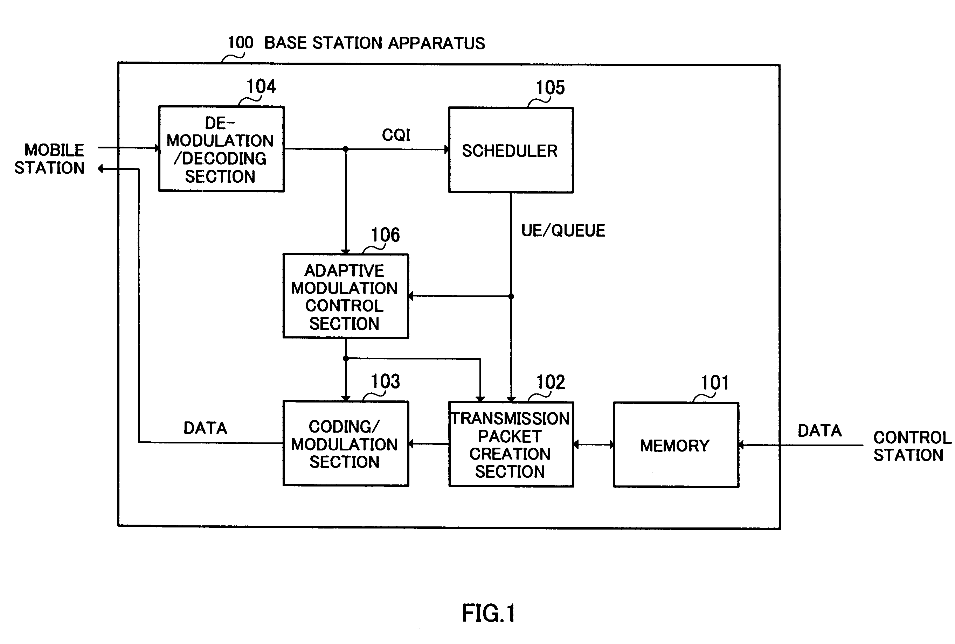

FIG.1 is a block diagram showing the configuration of a base station apparatus according to Embodiment 1.

A base station apparatus 100 is provided with a memory 101, a transmission packet creation section 102, a coding/modulation section 103, a demodulation/decoding section 104, a scheduler 105 and an adaptive modulation control section 106. Here, for simplicityof explanation, a block that performs transmission/reception processing on a radio signal used for communications between a mobile station and the base station apparatus 100 is omitted.

A feature of this embodiment is to convert a CQI which is requested from a mobile station (UE; User Equipment) to a low value according to QoS when a transmission packet is actually transmitted and determine adaptive modulation parameters using the converted CQI to thereby adaptively modulate a transmission packet. In this way, when, for example, the mobile station sends a CQI requesting a 16QAM modulation scheme, if the base station actually sends a packet, the base station sends the packet according to a QPSK modulation scheme with stronger error resistance for received data, and can thereby improve the error rate characteristic on the mobile station side which receives this packet.

In FIG.1, the memory 101 stores data transmitted from a control station (RNC; Radio Network Controller) which is a higher-level station. The internal structure of the memory will be described later. In response to instructions from the scheduler 105 and adaptive modulation control section 106, the transmission packet creation section 102 extracts transmission data from the memory 101, creates a transmission packet from this data and outputs it to the coding/modulation section 103. The coding/modulation section 103 carries out coding processing on the packet output from the transmission packet creation section 102 under the control of the adaptive modulation control section 106, and then carries out modulation processing on the coded packet and transmits this packet to the mobile station through a radio transmission section and transmission antenna (both of which are not shown).

The demodulation/decoding section 104 carries out demodulation processing and decoding processing on a signal transmitted from the mobile station. Of the decoded received data, a CQI is output to the scheduler 105 and adaptive modulation control section 106. The scheduler 105 schedules packets to be transmitted to the mobile station based on the notified CQI and notifies the transmission packet creation section 102 and adaptive modulation control section 106 of the selected mobile station and queue (UE/Queue). The adaptive modulation control section 106 determines adaptive modulation parameters of the transmission packet based on the notified CQI and outputs a control signal indicating the determined parameters to the transmission packet creation section 102 and coding/modulation section 103.

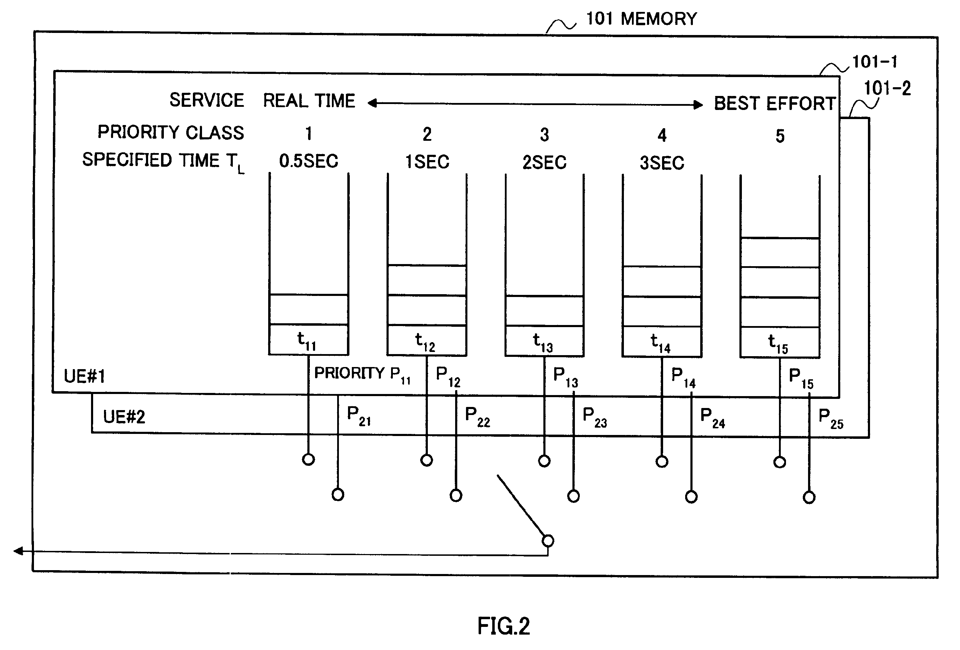

FIG.2 illustrates a concept of the data structure of the memory 101.

The memory 101 includes memories 101-1, 101-2, ⋯ (only 101-1 and 101-2 are shown) corresponding to mobile stations (UE) under the control of the base station apparatus 100. Furthermore, each memory is provided with a queue corresponding to priority classes (service classes) 1 to 5. When the memory 101 receives transmission data directed to the mobile station from a higher-level station, it stores this data in a queue corresponding to the mobile station to which that transmission data is directed and the priority class. This priority class is notified from the higher-level station concurrently with the transmission data and is, for example, a service class which is a classified QoS represented by a real-time characteristic of data. Then, in response to a request from the transmission packet creation section 102 which has received an instruction from the scheduler 105, the memory 101 selects a switch and outputs the data from the corresponding queue to the transmission packet creation section 102.

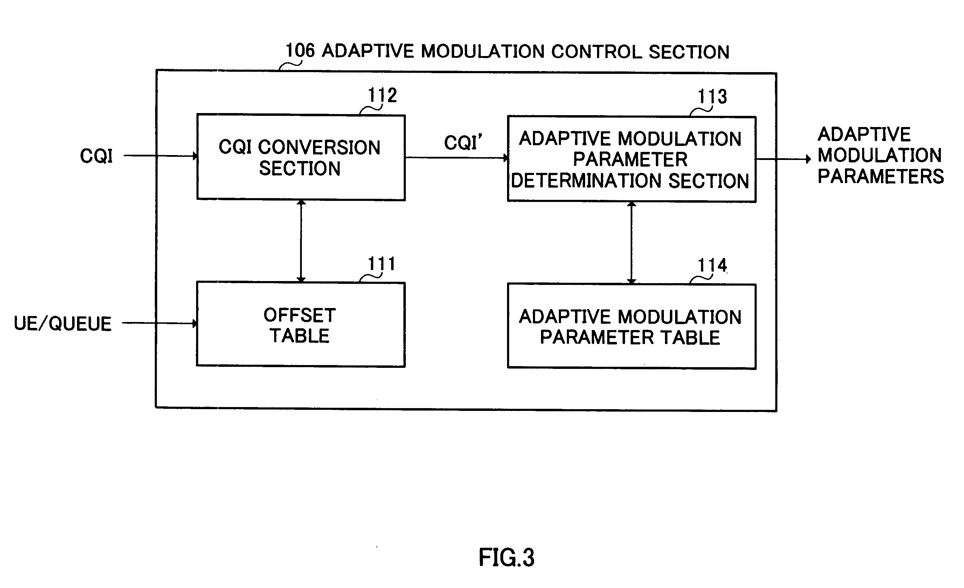

FIG.3 is a block diagram showing the internal configuration of the adaptive modulation control section 106. The adaptive modulation control section 106 includes an offset table 111, a CQI conversion section 112, an adaptive modulation parameter determination section 113 and an adaptive modulation parameter table 114.

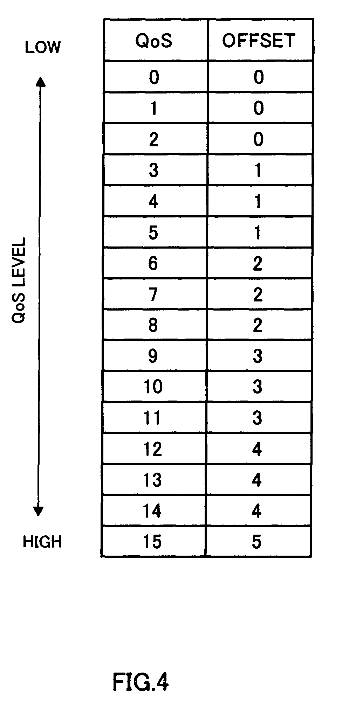

The offset table 111 receives the UE/queue selected from the scheduler 105 and outputs the corresponding offset value to the CQI conversion section 112. FIG.4 illustrates the data configuration of this offset table 111. Suppose the base station is notified of a value corresponding to the QoS level of each packet from the higher-level apparatus for each packet. It is appreciated that as the QoS level (e.g., real-time characteristic of data) increases, the absolute value of an offset value increases. 0 is set as an offset for data with a low QoS level (e.g., best effort data with a low real-time characteristic). That is, the CQI value does not change for such data even after a correction. Here, for clarity, a table type data in which offset values are set for QoS's of the respective packets is shown, but the memory 101 actually stores packets in queues corresponding to QoS's of the respective packets and notifies the offset table 111 of the queues in which the respective packets are stored, and therefore offset values corresponding to the respective queues are actually set in the table.

The CQI conversion section 112 converts the CQI output from the demodulation/decoding section 104 using an offset value output from the offset table 111 in such a way as:

$$CQI' = CQI - \text{offset value} \qquad \text{(Equation 1)}$$

and obtains the converted CQI (CQI' in the equation above) and outputs the CQI' to the adaptive modulation parameter determination section 113.

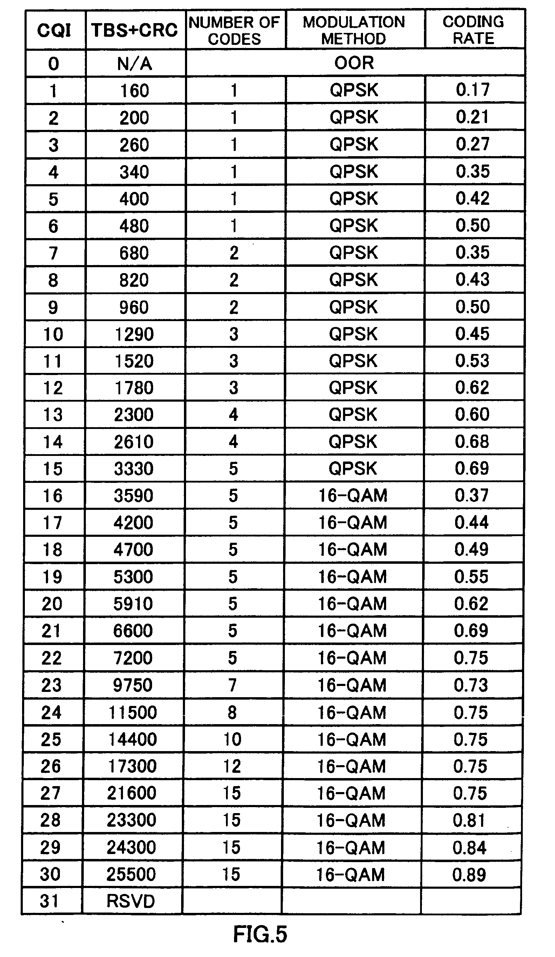

Based on the CQI output from the CQI conversion section 112, the adaptive modulation parameter determination section 113 determines adaptive modulation parameters (TB size, modulation multivalue number, coding rate) with reference to the adaptive modulation parameter table 114 and outputs the parameters to the transmission packetcreationsection102andcoding/modulationsection 103. FIG.5 illustrates the data configuration of the adaptive modulation parameter table 114 above. TB size, modulation multivalue number, coding rate, etc., are set for each CQI.

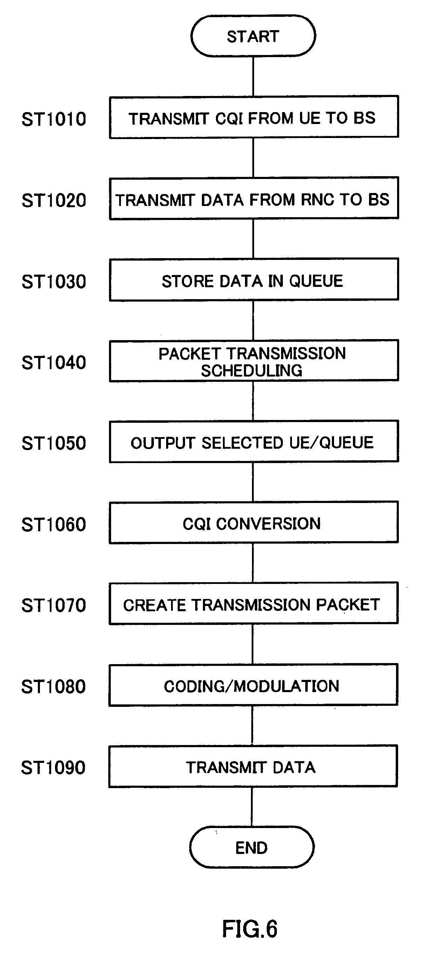

Next, steps of adaptive modulation processing by the base station apparatus having the above described configuration will be explained using the flow chart shown in FIG.6.

First, a mobile station (UE) sends a CQI indicating a propagation environment to a base station (BS) (ST1010). Then, a control station which is a higher-level station sends transmission data directed to each mobile station to the base station (ST1020). The base station stores this data in queues (memory 101) classified by service, etc., (ST1030). The scheduler 105 mounted in the base station performs scheduling for determining the order in which transmission packets are sent to the mobile station based on the CQI, etc., (ST1040), determines a mobile station to which the packets are transmitted and selects the queue in which the transmission data corresponding to this mobile station is stored (ST1050). The adaptive modulation control section 106 converts the CQI notified from the mobile station determined as the receiver of the data (ST1060). The adaptive modulation parameter determination section 113 determines the adaptive modulation parameters (TB size, modulation multivalue number, coding rate) based on the converted CQI with reference to the adaptive modulation parameter table 114, the transmission packet creation section 102 creates a transmission packet according to these adaptive modulation parameters (ST1070) and the coding/modulation section 103 codes and modulates (ST1080) and transmits the packet (ST1090).

In the above described configuration, the adaptive modulation parameter determination section 113 determines adaptive modulation parameters (TB size, modulation multivalue number, coding rate) indicating the adaptive modulation parameters of the transmission packet based on the CQI' which is the CQI subjected to a predetermined conversion. The CQI before the conversion specifies adaptive modulation parameters so that the receiving side receives the packet with necessary and sufficient reception quality. The CQI conversion section 112 converts this CQI so as to reduce the offset value corresponding to each QoS' and ensures that the transmitting side sends a packet with higher quality than the quality requested by the receiving side.

This allows adaptive modulation parameters to be changed for each service (QoS) making it easier for each packet to satisfy QoS at the time of reception. That is, in the case of transmission packets directed to the same mobile station, the CQI notified from the mobile station is the same, whereas it is assigned adaptive modulation parameters which differ from one QoS (selected queue) to another. This allows adaptive modulation parameters which can be received more easily to be selected for service data requiring a real-time characteristic such as speech, video, etc.

Furthermore, the offset table 111 in the above described configuration does not store fixed offsets for all QoS's, and offsets, for example, of best effort packets having a low real-time characteristic are set to 0. Thus, a CQI is not converted in a single uniform way, but for packets whose CQI is converted, such adaptive modulation parameters that reduce reception errors are selected, while the same adaptive modulation parameters as the conventional ones are applied to packets whose CQI is not converted. That is, it is possible to reduce reception errors for some packets while preventing throughput of the communication system from degrading.

Furthermore, in the above described configuration, it is possible to change adaptive modulation parameters based on QoS by only adding the above described CQI correction circuit (CQI conversion section 112) to the conventional apparatus which determines adaptive modulation parameters based on only a CQI, which makes implementation easier.

Thus, according to this embodiment, it is possible to realize fast data transmission while satisfying QoS's of transmission packets.

(Embodiment 2)

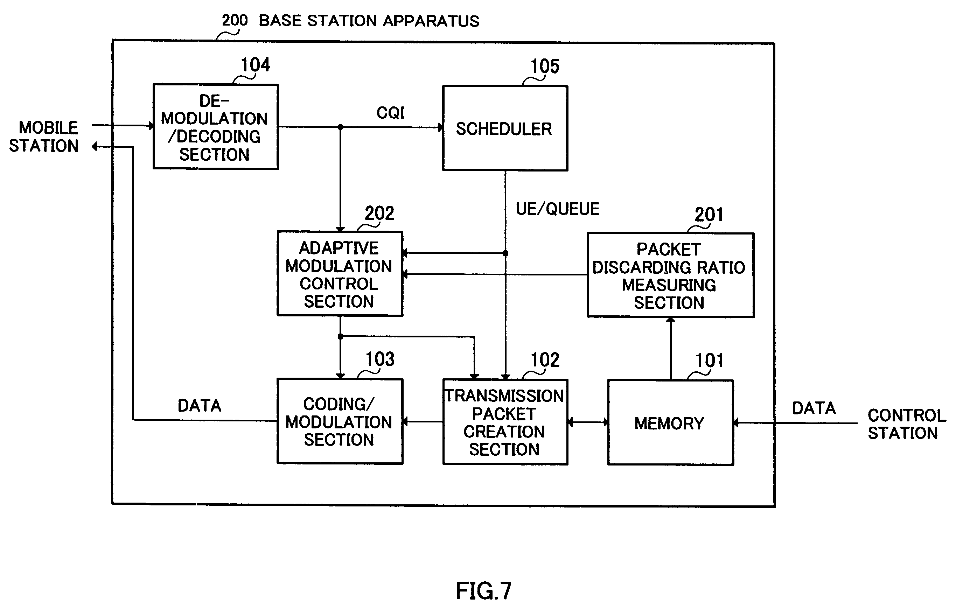

FIG.7 is a block diagram showing the configuration of a base station apparatus 200 according to Embodiment 2 of the present invention. This base station apparatus has the same basic configuration as that of the base station apparatus shown in FIG.1 and the same components are assigned the same reference numerals and explanations thereof will be omitted.

A feature of this embodiment is that when a CQI conversion section 203 converts a CQI, it converts the CQI taking into account a QoS achievement ratio (level of achievement) of past transmission packets. Here, a case where a packet discarding rate is used as a specific QoS achievement ratio will be explained as an example. The packet discarding rate represents a ratio of packets discardedinaunittime. Furthermore, packets discarded are packets which are not transmitted within a predetermined time or packets which are discarded because the number of retransmissions exceeds a predetermined number.

In FIG. 7, a packet discarding rate measuring section 201 checks the transmission state of packets in a memory 101, measures a packet discarding rate of each UE queue by queue and outputs the packet discarding rate to an adaptive modulation control section 202. The adaptive modulation control section 202 corrects the offset values explained in Embodiment 1 taking into account the packet discarding rate and converts a CQI using the corrected offset value to thereby perform adaptive modulation control.

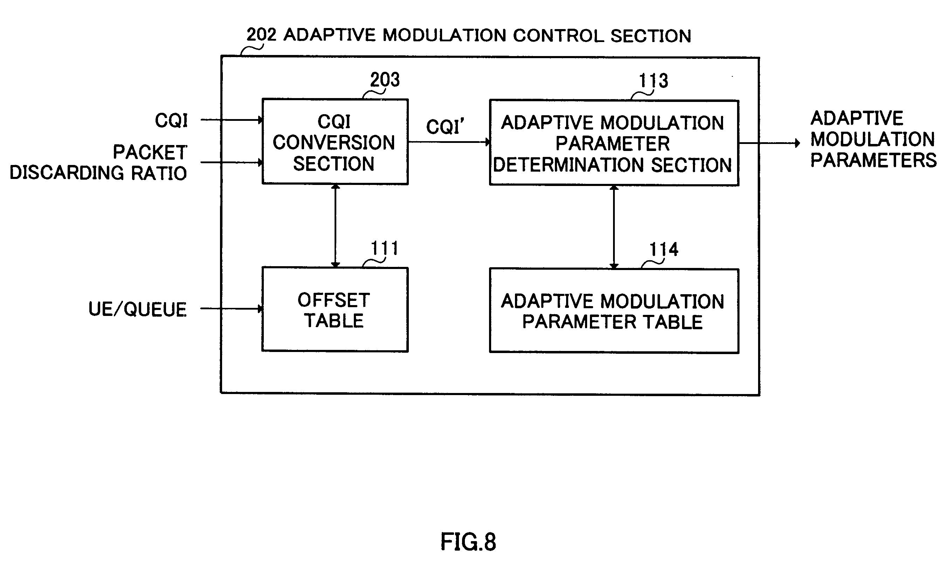

FIG.8 is a block diagram showing the internal configuration of the adaptive modulation control section 202. This adaptive modulation control section 202 has the same basic configuration as that of the adaptive modulation control section 106 shown in FIG.3, and therefore the same components are assigned the same reference numerals and explanations thereof will be omitted.

The CQI conversion section 203 compares the packet discarding rate output from the packet discarding rate measuring section 201 with a threshold and when the packet discarding rate is equal to or greater than the threshold, it corrects an offset value output from the offset table 111 by increasing the offset value by 1 dB and when the packet discarding rate is smaller than the threshold, it corrects the offset value by decreasing the offset value by 1 dB. This can be expressed by the following equation:

$$\text{Corrected offset value} = \text{initial offset value} + f(x) \qquad \text{(Equation 2)}$$

where,

$$x = \text{packet discarding rate} - \text{threshold} \qquad \text{(Equation 3)}$$

$$f(x) = 1 \text{ dB } (x \geqq 0) \qquad \text{(Equation 4)}$$

$$f(x) = -1 \text{ dB } (x < 0) \qquad \text{(Equation 5)}$$

Here, the case where an offset value is corrected in increments of 1 dB has been explained as an example, but it is also possible to use a value proportional to a difference between the packet discarding rate and threshold. Such a case can be expressed by the following equation:

$$\text{Corrected offset value} = \text{initial offset value} + x \qquad \text{(Equation 6)}$$

Thus, according to this embodiment, CQI is converted according to the actual reception situation of each UE, and therefore it is possible to effectively reduce the reception error rate and make it easier for transmission data to satisfy QoS. Furthermore, since the number of retransmissions is reduced, it is possible to prevent the throughput of the overall communication system from degrading.

Furthermore, it also has the effect of eliminating the necessity to strictly determine offset values (initial values) to be stored in the offset table 111 beforehand. That is, though offset values cannot be determined strictly if the performance of UE differs, this embodiment allows ex-post corrections of offset values.

(Embodiment 3)

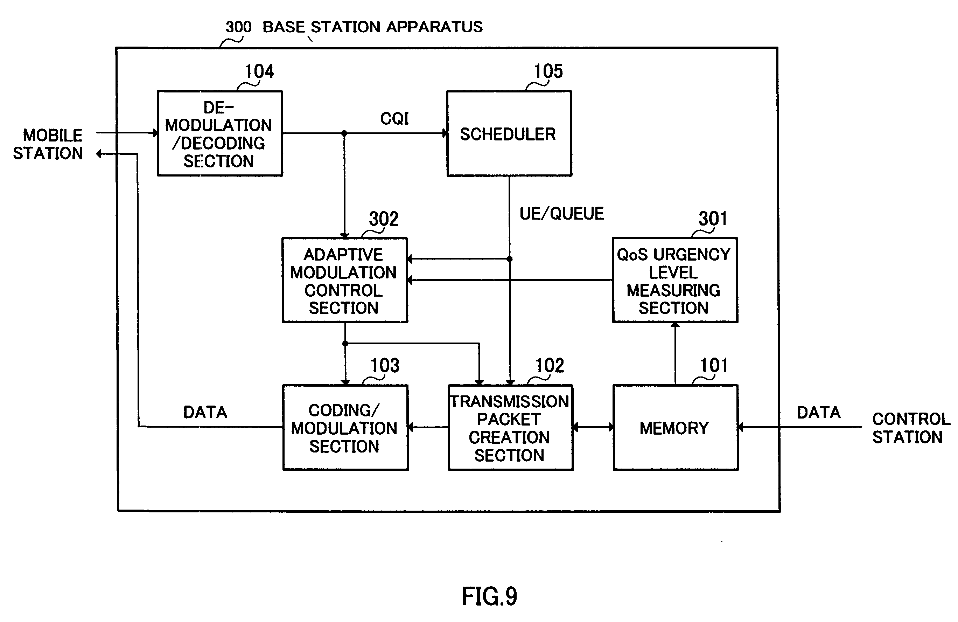

FIG.9 is a block diagram showing the configuration of a base station apparatus 300 according to Embodiment 3 of the present invention. This base station apparatus has the same basic configuration as that of the base station apparatus shown in FIG.1 and the same components are assigned the same reference numerals and explanations thereof will be omitted.

A feature of this embodiment is that an adaptive modulation control section 302 converts a CQI taking into account a QoS urgency level measured by a QoS urgency level measuring section 301 to perform adaptive modulation control. The QoS urgency level refers to a remaining time with respect to a transmission allowable delay time of a transmission packet and a high QoS urgency level means that the transmission packet must be sent as rapidly as possible.

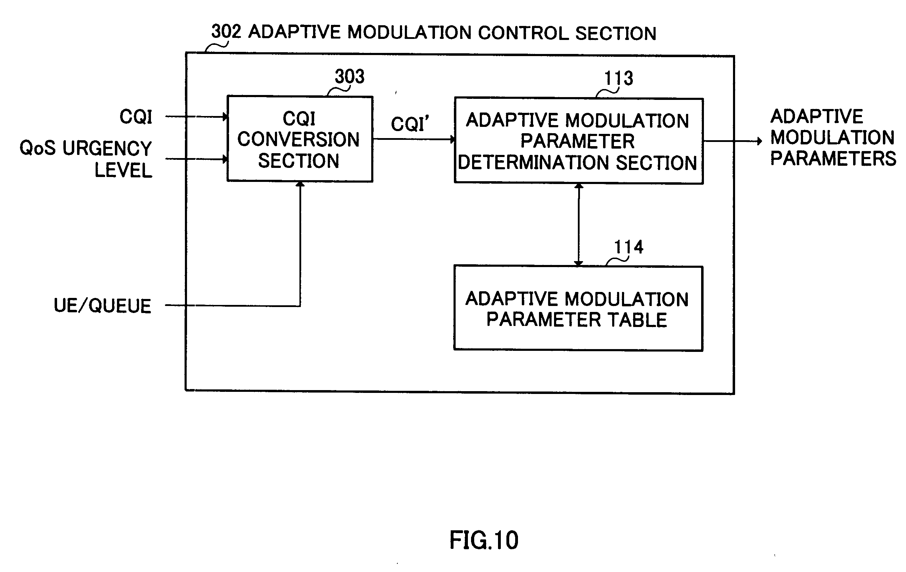

FIG.10 is a block diagram showing the internal configuration of the adaptive modulation control section 302. The same components as those of the adaptive modulation control section 106 shown in FIG. 3 are assigned the same reference numerals and explanations thereof will be omitted.

A CQI conversion section 303 calculates an offset value according to the following equation:

$$\text{Offset value} = 1/(\text{remaining time} + \alpha) \qquad \text{(Equation 7)}$$

and outputs the offset value to an adaptive modulation parameter determination section 113. Here, $\alpha$ is a constant for preventing the value of the fraction in the above described equation from becoming infinity when the remaining time is 0.

Thus, even for the data stored in the same queue, this embodiment changes its amount of offset depending on the urgency level with respect to QoS (allowable delay time) , and can thereby receive urgent packets more easily and improve the achievement ratio of QoS. Furthermore, for packets with a low urgency level, this embodiment reduces the amount of offset to thereby reduce the possibility that retransmissions may occur in a higher layer and can thereby prevent the end-to-end (overall communication system) throughput from degrading.

(Embodiment 4)

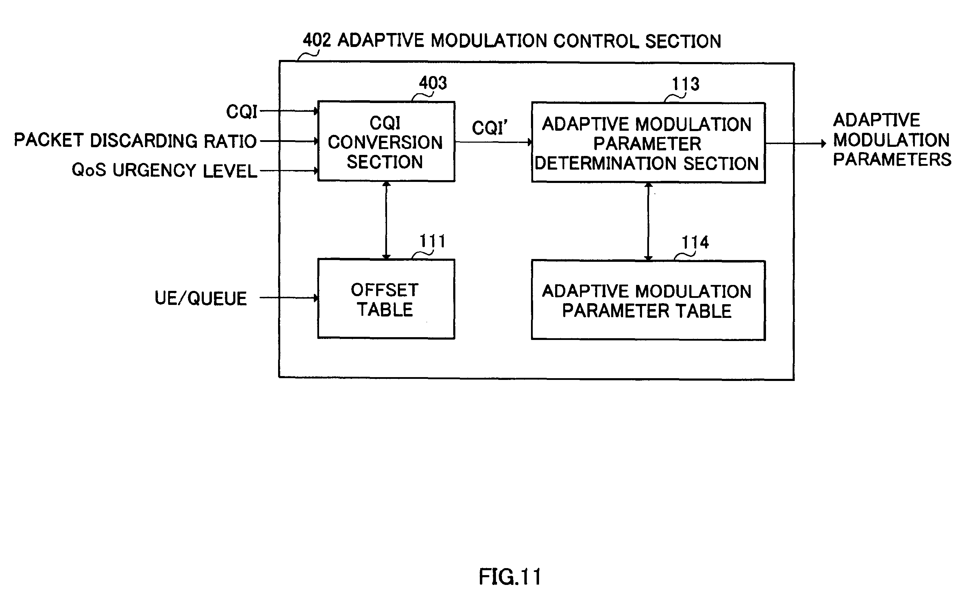

FIG.11 is a block diagram showing an example of the configuration of an adaptive modulation control section 402 according to Embodiment 4 of the present invention. This adaptive modulation control section 402 is a combination of the adaptive modulation control section 202 of Embodiment 2 (see FIG. 8) and the adaptive modulation control section 302 of Embodiment 3 (see FIG.10) and the same components are assigned the same reference numerals and explanations thereof will be omitted.

A CQI conversion section 403 calculates an offset value from the following equation:

$$\text{Offset value} = f(x) + 1/(\text{remaining time} + \alpha) \qquad \text{(Equation 8)}$$

Thus, this embodiment corrects the offset based on both QoS and the urgency level of QoS, and can thereby make it easier to achieve QoS during reception.

(Embodiment 5)

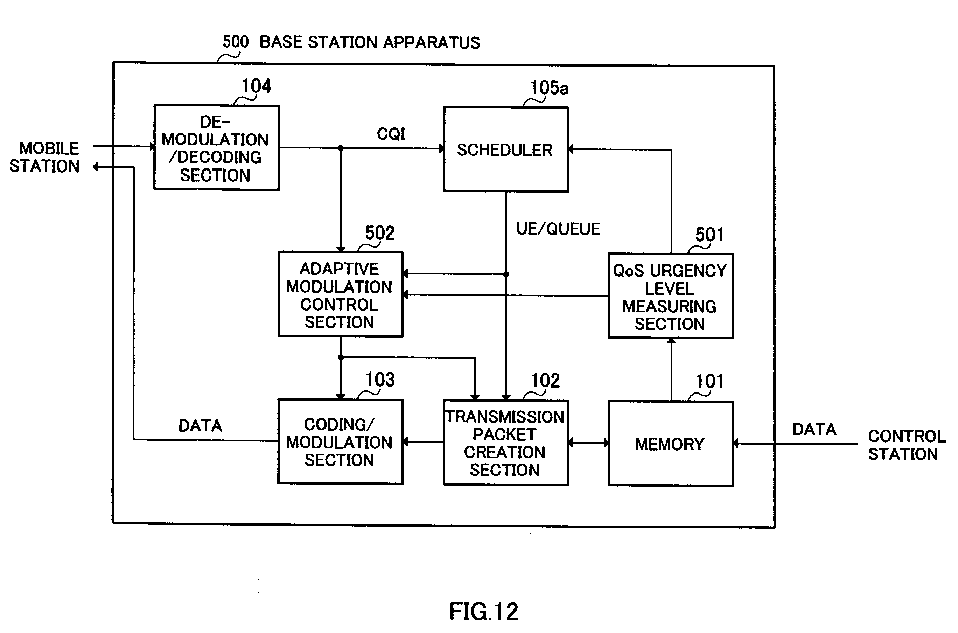

FIG. 12 is a block diagram showing the configuration of a base station apparatus 500 according to Embodiment 5 of the present invention. This base station apparatus has the same basic configuration as the base station apparatus shown in FIG.1 and the same components are assigned the same reference numerals and explanations thereof will be omitted.

A feature of this embodiment is the inclusion of both a scheduler 105a that schedules packets based on an urgency level of QoS and an adaptive modulation control section 502 having the same configuration as that of any one of the adaptive modulation control sections explained in Embodiment 1 to Embodiment 4.

A memory 101 notifies a QoS urgency level measuring section 501 of a storage time $t_s$ at which a packet is stored, a priority class of the queue in which the packet is stored and specified time $T_L$ of the queue in which the packet is stored for each packet.

The QoS urgency level measuring section 501 contains timers for the respective packets, calculates a remaining time during which a packet can stay in the memory 101, that is, a remaining time with respect to the time (allowable delay time) that the packet can accept as a delay of transmission timing based on $t_S$ and $T_L$ and outputs the remaining time to the scheduler 105a.

The scheduler 105a calculates priority for each packet using the remaining time output from the QoS urgency level measuring section 501, selects a queue in which the packet with the highest priority is stored and outputs queue to a transmission packet creation section 102. As the above described remaining time, a value corresponding to the packet stored in the queue at the oldest time is used. This causes the scheduler 105a to set a higher priority for a packet having less remaining time.

Then, the scheduler 105a further controls the transmission packet creation section 102 and adaptive modulation control section 502 according to the requested priority.

Thus, according to this embodiment, the scheduler 105a sends packets stored in a UE/queue with a high urgency level preferentially. However, even if the packets are sent with a high priority, that would be meaningless if the packets cannot be received and retransmission is repeated, which may lead to a reduction of throughput. Furthermore, even if adaptive modulation parameters of a UE/queue with a high urgency level are corrected and sent in a manner they can be easily received as in the cases of Embodiment 1 to Embodiment 4, the effects would be small if opportunities for transmission are not given with a high priority. Therefore, by combining the above described two circuits using a common measure (criterion of judgment) of the QoS urgency level and keeping them tuned, it is possible to improve both functions, further prevent the system throughput from degrading through the synergetic effect and improve an achievement ratio of QoS.

Embodiment 1 through Embodiment 5 have explained the cases where adaptive modulation is realized with QoS taken into consideration by correcting the value of CQI notified from the mobile station as examples here, but the way how QoS is taken into consideration is not limited to this and it is also possible to determine adaptive modulation parameters based on a CQI notified from the mobile station and then correct the adaptive modulation parameters based on the QoS.

Furthermore, Embodiment 1 through Embodiment 5 have explained the cases where the base station determines adaptive modulation parameters as examples here, but it is also possible for the mobile station to determine adaptive modulation parameters in the same configuration as that described above and notify the parameters to the base station or it is further possible for the mobile station to determine adaptive modulation parameters with QoS taken into consideration and notify the parameters to the base station.

Furthermore, Embodiment 1 through Embodiment 5 have explained the cases where a prestored table data is used or arithmetic calculation equations are used to correct the value of a CQI as examples here, but the correction of the CQI value is not limited to either of the two methods and they are mutually compatible.

As described above, the present invention can realize fast data transmission while satisfying QoS of transmission packets.

This application is based on the Japanese Patent Application No.2002-346270 filed on November 28, 2002, entire content of which is expressly incorporated by reference herein.

Industrial Applicability

The present invention is applicable to a base station apparatus that performs adaptive modulation in a communication system such as HSDPA (High Speed Downlink Packet Access) and an adaptive modulation method used in this apparatus.

**Claims**

1. A base station apparatus comprising a determination section that determines adaptive modulation parameters used to transmit a transmission packet directed to a mobile station based on channel quality between the own station and said mobile station and QoS of said transmission packet.

2. A base station apparatus comprising:

   a determination section that determines adaptive modulation parameters used to transmit a transmission packet directed to a mobile station based on channel quality between the own station and said mobile station; and
   a change section that changes the adaptive modulation parameters determined by said determination section based on QoS of said transmission packet.

3. A base station apparatus that determines adaptive modulation parameters used to transmit a transmission packet directed to a mobile station based on channel quality between the own station and said mobile station, comprising:

   a change section that changes a correspondence between said channel quality and adaptive modulation parameters determined based on said channel quality, based on QoS of said transmission packet; and
   a determination section that determines adaptive modulation parameters used to transmit said transmission packet using said changed correspondence.

4. A base station apparatus that determines adaptive modulation parameters of a transmission packet directed to a mobile station based on a CQI transmitted from said mobile station, comprising:

   a correction section that corrects the CQI transmitted from said mobile station based on QoS of said transmission packet; and
   a determination section that determines adaptive modulation parameters of said transmission packet based on the corrected CQI.

5. The base station apparatus according to claim 1, wherein said determination section determines said adaptive modulation parameters further based on an achievement ratio of QoS of said transmission packet transmitted in the past.

6. The base station apparatus according to claim 3, wherein said determination section determines said adaptive modulation parameters further based on an achievement ratio of QoS of said transmission packet transmitted in the past.

7. The base station apparatus according to claim 1, wherein said determination section determines said adaptive modulation parameters further based on a remaining time with respect to a transmission allowable delay time of said transmission packet.

8. The base station apparatus according to claim 3, wherein said determination section determines said adaptive modulation parameters further based on a remaining time with respect to a transmission allowable delay time of said transmission packet.

**9.** The base station apparatus according to claim 1, further comprising a scheduler that schedules transmission times based on a remaining time with respect to a transmission allowable delay time of said transmission packet.

**10.** The base station apparatus according to claim 3, further comprising a scheduler that schedules transmission times based on a remaining time with respect to a transmission allowable delay time of said transmission packet.

**11.** A mobile station apparatus comprising:

a determination section that determines adaptive modulation parameters used when a base station transmits a transmission packet based on channel quality between said base station and the own station and QoS of said transmission packet transmitted from said base station to the own station; and
a notification section that notifies said base station of the determined adaptive modulation parameters.

**12.** A mobile station apparatus that determines adaptive modulation parameters used by a base station for a transmission packet directed to the own station based on channel quality between said base station and the own station and notifies said base station of said adaptive modulation parameters, comprising:

a change section that changes a correspondence between said channel quality and adaptive modulation parameters determined based on said channel quality, based on QoS of said transmission packet; and
a determination section that determines adaptive modulation parameters used for said transmission packet using said changed correspondence.

**13.** An adaptive modulation method for determining adaptive modulation parameters used by a base station for a transmission packet directed to a mobile station based on channel quality between said base station and mobile station, comprising:

a change step of changing a correspondence between said channel quality and adaptive modulation parameters determined based on said channel quality, based on QoS of said transmission packet; and
a determination step of determining adaptive modulation parameters used to transmit said transmission packet using said changed correspondence.

100 BASE STATION APPARATUS

104 DE-MODULATION /DECODING SECTION

MOBILE STATION

CQI

105 SCHEDULER

UE/QUEUE

106 ADAPTIVE MODULATION CONTROL SECTION

103 CODING/ MODULATION SECTION

102 TRANSMISSION PACKET CREATION SECTION

101 MEMORY

DATA

DATA  CONTROL STATION

EP 1 571 762 A1

FIG.1

FIG.2

CQI → **112 CQI CONVERSION SECTION** → CQI' → **113 ADAPTIVE MODULATION PARAMETER DETERMINATION SECTION** → ADAPTIVE MODULATION PARAMETERS

UE/QUEUE → **111 OFFSET TABLE**

**114 ADAPTIVE MODULATION PARAMETER TABLE**

FIG.3

EP 1 571 762 A1

LOW

| QoS | OFFSET |
|:---:|:------:|
| 0 | 0 |
| 1 | 0 |
| 2 | 0 |
| 3 | 1 |
| 4 | 1 |
| 5 | 1 |
| 6 | 2 |
| 7 | 2 |
| 8 | 2 |
| 9 | 3 |
| 10 | 3 |
| 11 | 3 |
| 12 | 4 |
| 13 | 4 |
| 14 | 4 |
| 15 | 5 |

QoS LEVEL

HIGH

FIG.4

| CQI | TBS+CRC | NUMBER OF CODES | MODULATION METHOD | CODING RATE |
|---|---|---|---|---|
| 0 | N/A | OOR | | |
| 1 | 160 | 1 | QPSK | 0.17 |
| 2 | 200 | 1 | QPSK | 0.21 |
| 3 | 260 | 1 | QPSK | 0.27 |
| 4 | 340 | 1 | QPSK | 0.35 |
| 5 | 400 | 1 | QPSK | 0.42 |
| 6 | 480 | 1 | QPSK | 0.50 |
| 7 | 680 | 2 | QPSK | 0.35 |
| 8 | 820 | 2 | QPSK | 0.43 |
| 9 | 960 | 2 | QPSK | 0.50 |
| 10 | 1290 | 3 | QPSK | 0.45 |
| 11 | 1520 | 3 | QPSK | 0.53 |
| 12 | 1780 | 3 | QPSK | 0.62 |
| 13 | 2300 | 4 | QPSK | 0.60 |
| 14 | 2610 | 4 | QPSK | 0.68 |
| 15 | 3330 | 5 | QPSK | 0.69 |
| 16 | 3590 | 5 | 16-QAM | 0.37 |
| 17 | 4200 | 5 | 16-QAM | 0.44 |
| 18 | 4700 | 5 | 16-QAM | 0.49 |
| 19 | 5300 | 5 | 16-QAM | 0.55 |
| 20 | 5910 | 5 | 16-QAM | 0.62 |
| 21 | 6600 | 5 | 16-QAM | 0.69 |
| 22 | 7200 | 5 | 16-QAM | 0.75 |
| 23 | 9750 | 7 | 16-QAM | 0.73 |
| 24 | 11500 | 8 | 16-QAM | 0.75 |
| 25 | 14400 | 10 | 16-QAM | 0.75 |
| 26 | 17300 | 12 | 16-QAM | 0.75 |
| 27 | 21600 | 15 | 16-QAM | 0.75 |
| 28 | 23300 | 15 | 16-QAM | 0.81 |
| 29 | 24300 | 15 | 16-QAM | 0.84 |
| 30 | 25500 | 15 | 16-QAM | 0.89 |
| 31 | RSVD | | | |

FIG.5

```
                        ┌─────────────┐
                        │    START    │
                        └─────────────┘
                               │
ST1010      ┌──────────────────────────────────────┐
            │     TRANSMIT CQI FROM UE TO BS        │
            └──────────────────────────────────────┘
                               │
ST1020      ┌──────────────────────────────────────┐
            │    TRANSMIT DATA FROM RNC TO BS       │
            └──────────────────────────────────────┘
                               │
ST1030      ┌──────────────────────────────────────┐
            │         STORE DATA IN QUEUE           │
            └──────────────────────────────────────┘
                               │
ST1040      ┌──────────────────────────────────────┐
            │       PACKET TRANSMISSION             │
            │          SCHEDULING                   │
            └──────────────────────────────────────┘
                               │
ST1050      ┌──────────────────────────────────────┐
            │      OUTPUT SELECTED UE/QUEUE         │
            └──────────────────────────────────────┘
                               │
ST1060      ┌──────────────────────────────────────┐
            │          CQI CONVERSION              │
            └──────────────────────────────────────┘
                               │
ST1070      ┌──────────────────────────────────────┐
            │     CREATE TRANSMISSION PACKET       │
            └──────────────────────────────────────┘
                               │
ST1080      ┌──────────────────────────────────────┐
            │        CODING/MODULATION             │
            └──────────────────────────────────────┘
                               │
ST1090      ┌──────────────────────────────────────┐
            │          TRANSMIT DATA               │
            └──────────────────────────────────────┘
                               │
                        ┌─────────────┐
                        │     END     │
                        └─────────────┘
```

FIG.6

FIG.7

200 BASE STATION APPARATUS

104 DE-MODULATION/DECODING SECTION

105 SCHEDULER

202 ADAPTIVE MODULATION CONTROL SECTION

201 PACKET DISCARDING RATIO MEASURING SECTION

103 CODING/MODULATION SECTION

102 TRANSMISSION PACKET CREATION SECTION

101 MEMORY

MOBILE STATION

CONTROL STATION

CQI

UE/QUEUE

DATA

DATA

EP 1 571 762 A1

202 ADAPTIVE MODULATION CONTROL SECTION

CQI →

PACKET DISCARDING RATIO →

203
CQI CONVERSION SECTION

CQI' →

113
ADAPTIVE MODULATION PARAMETER DETERMINATION SECTION

→ ADAPTIVE MODULATION PARAMETERS

111
OFFSET TABLE

UE/QUEUE →

114
ADAPTIVE MODULATION PARAMETER TABLE

FIG.8

EP 1 571 762 A1

FIG.9

EP 1 571 762 A1

CQI →

QoS URGENCY LEVEL →

303

**CQI CONVERSION SECTION**

CQI' →

113

**ADAPTIVE MODULATION PARAMETER DETERMINATION SECTION**

→ **ADAPTIVE MODULATION PARAMETERS**

114

**ADAPTIVE MODULATION PARAMETER TABLE**

UE/QUEUE →

FIG.10

CQI → 

PACKET DISCARDING RATIO →

QoS URGENCY LEVEL →

**403**

CQI CONVERSION SECTION

CQI' →

**113**

ADAPTIVE MODULATION PARAMETER DETERMINATION SECTION

→ ADAPTIVE MODULATION PARAMETERS

**111**

UE/QUEUE →

OFFSET TABLE

**114**

ADAPTIVE MODULATION PARAMETER TABLE

FIG.11

EP 1 571 762 A1

500 BASE STATION APPARATUS

FIG.12

EP 1 571 762 A1

## INTERNATIONAL SEARCH REPORT

International application No.

PCT/JP03/15058

**A. CLASSIFICATION OF SUBJECT MATTER**
Int.Cl$^7$ H04B7/26, H04L1/00, H04L27/00, H04L27/34, H04L27/18

According to International Patent Classification (IPC) or to both national classification and IPC

**B. FIELDS SEARCHED**

Minimum documentation searched (classification system followed by classification symbols)
Int.Cl$^7$ H04B7/24-7/26, H04Q7/00-7/38, H04L1/00, H04L27/00, H04L27/34, H04L27/18

Documentation searched other than minimum documentation to the extent that such documents are included in the fields searched
| | | | |
|---|---|---|---|
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2001-77833 A (Lucent Technologies Inc.), 23 March, 2001 (23.03.01), Par. Nos. [0017], [0020] to [0027] & EP 1073301 A1 & AU 200048697 A & BR 200002977 A & CA 2314032 A1 & CN 1291016 A & KR 2001049893 A & US 2002/0051424 A1 | 1-13 |
| Y | Atsushi HARADA et al., "Kudari Link Broadband OFCDM ni Okeru QoS o Koryo shita Tekio Musen Parameter Seigyo", The Institute of Electronics, Information and Communication Engineers Gijutsu Kenkyu Hokoku, 12 April, 2002 (12.04.02), Vol.102, No.24, pages 141 to 146 | 1-13 |

☒ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 08 March, 2004 (08.03.04) | 23 March, 2004 (23.03.04) |

| Name and mailing address of the ISA/<br>Japanese Patent Office | Authorized officer |
|---|---|
| Facsimile No. | Telephone No. |

Form PCT/ISA/210 (second sheet) (July 1998)

22

**INTERNATIONAL SEARCH REPORT**

| International application No. |
| --- |
| PCT/JP03/15058 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2002-539692 A (Siemens AG.), 19 November, 2002 (19.11.02), Par. No. [0052] & DE 9909779 A1 & WO 00/54531 A1 & EP 1163815 A1 & CN 1354962 A | 5-10 |
| A | JP 10-107769 A (Nokia Mobile Phones Ltd.), 24 April, 1998 (24.04.98), Par. Nos. [0042] to [0043] & EP 0831669 A2 & US 5790534 A & US 6005852 A | 1-13 |
| A | JP 2002-78012 A (Matsushita Electric Industrial Co., Ltd.), 15 March, 2002 (15.03.02), Full text; all drawings (Family: none) | 1-13 |
| A | JP 2002-199037 A (Matsushita Electric Industrial Co., Ltd.), 12 July, 2002 (12.07.02), Full text; all drawings & WO 02/52808 A1 & EP 1253759 A1 & US 2003/0012295 A1 & KR 2002079914 A & CN 1406427 A | 1-13 |

Form PCT/ISA/210 (continuation of second sheet) (July 1998)